# EUROPÄISCHE PATENTSCHRIFT

(11) **EP 1 106 935 B1**
(45) Veröffentlichungstag und Bekanntmachung des Hinweises auf die Patenterteilung: **18.10.2006**
(21) Anmeldenummer: 00126604.8
(22) Anmeldetag: 04.12.2000
(51) Int. Cl.: F24D 11/02, F24J 2/04

(54) **Gebäude**
Building
Batiment

(30) Priorität: 06.12.1999 DE 19958650
(43) Veröffentlichungstag der Anmeldung: 13.06.2001
(73) Patentinhaber: Messner, Konrad, 78628 Rottweil-Hausen (DE)
(72) Erfinder: Messner, Konrad, 78628 Rottweil-Hausen (DE)
(74) Vertreter: Patentanwälte Westphal, Mussgnug & Partner

(56) Entgegenhaltungen:
- AT-B- 382 232
- DE-A- 3 608 197
- US-A- 4 126 270
- US-A- 4 467 859

## Beschreibung

Die Erfindung betrifft ein Gebäude mit einem Dach der im Oberbegriff des Anspruchs 1 angegebenen Art.

Aus AT 382 232 B ist ein Gebäude mit einem Kaltdach bekannt, unter dessen Dachhaut eine Innenverschalung angebracht ist. Zwischen der Dachhaut und der Innenverschalung ist ein Luftkanal gebildet, dessen eines Ende in einen Giebelraum mündet, aus dem Luft in ein Luftleitungssystem zum Heizen des Gebäudes gesaugt wird. Der Ausgang dieses Luftleitungssystems ist an das andere Ende des zwischen der Dachhaut und der Innenverschalung angeordneten Luftkanals angeschlossen, so dass ein geschlossener Luftkreislauf gebildet wird. Die im Luftkanal zwischen der Dachhaut und der Innenverschalung befindliche Luft wird durch Sonneneinstrahlung auf die Dachhaut erwärmt und in das Luftleitungssystem zum Heizen des Gebäudes gepumpt, so dass ähnlich wie bei einer Wasserzentralheizung ein geschlossener Luftkreislauf gebildet wird.

Der Wirkungsgrad dieser solarbetriebenen "Luftzentralheizung" ist jedoch noch verhältnismäßig gering.

Aus DE 36 08 197 A1 ist ein Gebäude mit einem Satteldach bekannt, bei welchem die Dachfläche im Firstbereich teilweise verglast ist. Unter dem First verläuft ein Luftkanal, welchem über unter Dachhaut verlaufende Kanäle Luft zugeführt wird. In dem Luftkanal sammelt sich die durch Sonnenenergie erwärmte Luft, welcher die Wärme zur Beheizung des Gebäudes mit einem Wärmetauscher entzogen wird.

Ausgehend von diesem Konzept liegt der vorliegenden Erfindung die Aufgabe zugrunde, die Ausbeute der durch Sonneneinstrahlung gewinnbaren Wärme ohne Zufuhr zusätzlicher Energie mit einfachen konstruktiven Mitteln zu erhöhen.

Gelöst wird diese Aufgabe gemäß der Erfindung mit den im Anspruch 1 angegebenen Merkmalen.

Hiernach ist der bekannte Luftkanal zu einem nach oben und seitlich hermetisch abgedichteten Stauraum ausgebildet, aus welchem die durch Sonnenenergie erwärmte Luft unter Wirkung des thermischen Überdrucks über die im Stauraum mündende Luftleitung in das Gebäude, z. B. zu einem Wärmespeicher, einem Wärmetauscher, einer Wärmepumpe, einem Heizkörper oder unmittelbar einem zu beheizenden Raum selbstregelnd zugeführt wird.

Auf ein zusätzliches Gebläse oder einen Ventilator, der elektrisch angetrieben werden müsste, kann verzichtet werden, da der thermische Überdruck dafür sorgt, dass die im Stauraum sich sammelnde Luft über die Luftleitung in das Gebäude gedrückt wird. Da der Stauraum, der quasi als "Wärmefalle" wirkt, nach oben und seitlich hermetisch abgedichtet ist, kann die Luft nur durch die Luftleitung austreten. Der Austritt der Luft durch die unter der Dachhaut verlaufenden Kanäle wird durch die nachströmende Außenluft, die darüberhinaus durch die einstrahlende Sonne vorerwärmt wird, wirksam verhindert.

Gemäß Anspruch 2 ist es zur Verbesserung des Effektes empfehlenswert, die nicht verglaste Dachhaut ganz oder mindestens in Nachbarschaft des licht- und wärmedurchlässigen Teils abzudichten.

Zur Erzielung der oben erwähnten Vorerwärmung ist gemäß Anspruch 3 vorgeschlagen, den lichtundurchlässigen Teil der Dachhaut wärmedurchlässig zu gestalten.

Zur weiteren Erhöhung des Wirkungsgrades können gemäß Anspruch 10 in diesem Bereich einzelne Dachelemente, z. B. Ziegel, lichtdurchlässig ausgebildet sein, was zu einer noch besseren Vorerwärmung der zum Stauraum strömenden Luft führt.

Weitere konstruktive Einzelheiten sind im übrigen Gegenstand der Unteransprüche 4 bis 9.

Die Erfindung ist nachfolgend anhand eines in der Zeichnung dargestellten Ausführungsbeispieles näher beschrieben und erläutert. In der Zeichnung zeigen:
- Figur 1: ein Gebäude im schematischen Querschnitt gemäß der Erfindung,
- Figur 2: einen vergrößerten Querschnitt des Daches gemäß Figur 1 im Firstbereich und
- Figur 3: ein weiter vergrößerter Querschnitt des lichtdurchlässigen Teiles des Daches gemäß Figur 1 und 2.

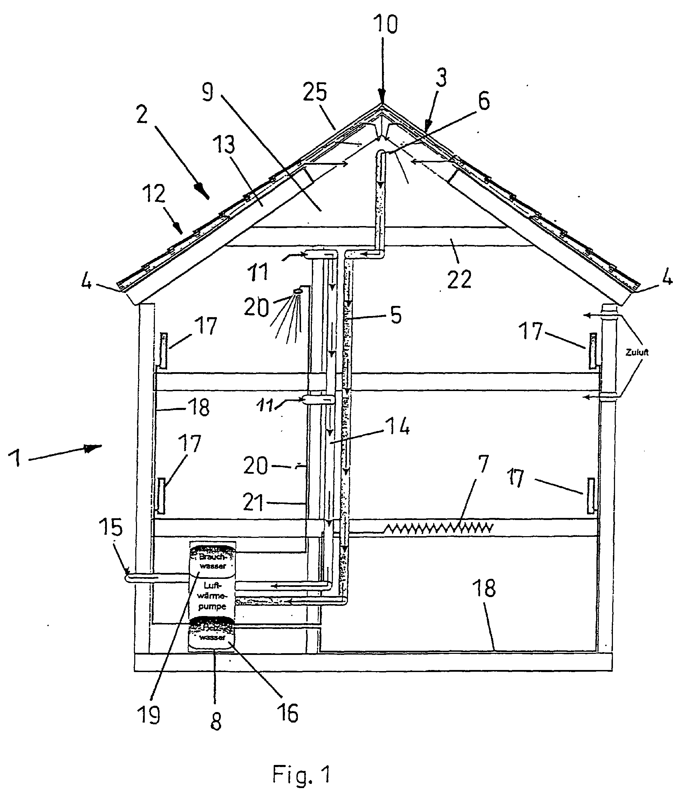

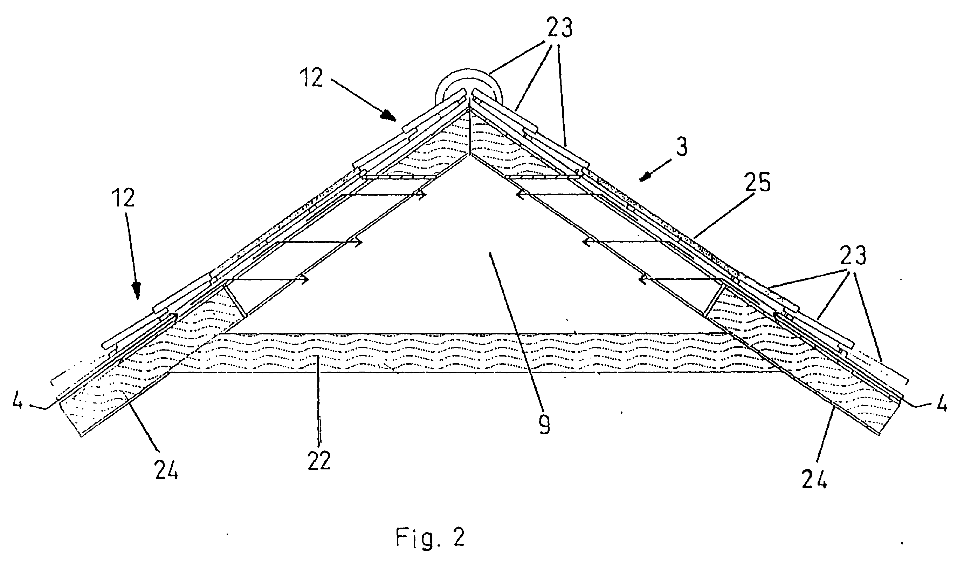

Auf das in Fig. 1 abgebildete Gebäude 1 ist ein Dach 2 mit geneigten Dachflächen aufgesetzt. Das Dach 2 ist aus einem lichtundurchlässigen Teil 12 und einem lichtdurchlässigen Teil 3 aufgebaut, der sich im Bereich des Dachfirstes 10 befindet. Unterhalb des lichtdurchlässigen Teiles 3 ist ein abgetrennter Stauraum 9 vorgesehen, der nach unten von einer Decke 22 abgeschlossen ist. Die Dachhaut des Daches 2 kann zum Beispiel im lichtundurchlässigen Teil 12 aus Dachziegeln aufgebaut sein, während der lichtdurchlässige Teil 3 verglast ist. Im lichtundurchlässigen Teil 12 ist unterhalb der Dachhaut eine Innenverschalung 13 derart angeordnet, dass zwischen der Dachhaut und der Innenverschalung 13 eine Luftzuführung 4 (vergl. Figur 2) gebildet wird, durch die Außenluft in den Stauraum 9 strömen kann. Im Stauraum 9 ist die Öffnung 6 einer Luftleitung 5 angeordnet, welche die Luft 4 im Stauraum 9 abführt und einem Wärmetauscher, Wärmespeicher, einer Luft-Wandheizung, einer Wärmepumpe 8 oder auch dem zu beheizenden Raum unmittelbar zuführt. Im Wärmetauscher bzw. in der Wärmepumpe 8 ist ein Boiler für Heizwasser angeordnet, der über ein Warmwasserleitungsnetz 18 Heizkörper 17 speist. Neben dem Heizwasserboiler 16 ist im Wärmetauscher bzw. in der Wärmepumpe 8 noch ein Warmwasserboiler 19 angeordnet, der mehrere Warmwasserentnahmestellen 20 über ein Warmwasserleitungssnetz 21 speist. Von den einzelnen Räumen des Gebäudes 1 führt ein Luftleitungssystem 14 zum Wärmetauscher bzw. zur Wärmepumpe 8.

Von außen strömt über die Luftzuführung 4, die zwischen der Dachhaut und der Innenverschalung 13 angeordnet ist, Außenluft in den Stauraum 9, wo sie bei Sonneneinstrahlung erwärmt wird. Durch Sonneneinstrahlung wird die durch die Luftzuführung 4 strömende Außenluft bereits erwärmt, so dass in den Stauraum 9 vorgewärmte Luft strömt, wo sie weiter erwärmt wird. Auf Grund des thermischen Drucks wird die Warmluft im Stauraum 9 über die Öffnung 6 der Luftleitung 5 abgeführt und zum Wärmetauscher bzw. zur Wärmepumpe 8 geleitet, wo ihr Wärme entzogen wird, um das Wasser im Heizwasserboiler 16 und im Warmwasserboiler 19 zu erhitzen. Die abgekühlte Luft wird über einen Auslass 15 nach außen geblasen. Aus den Räumen des Gebäudes 1 wird verbrauchte Luft über Einlässe 11 abgesaugt und über ein Luftleitungssystem 14 ebenfalls dem Wärmetauscher der Wärmepumpe 8 zugeführt, wo der verbrauchten Luft Wärme entzogen wird, um das Heizwasser im Heizwasserboiler 16 und das Warmwasser im Warmwasserboiler 19 zu erwärmen. Die abgekühlte Abluft wird ebenfalls über den Auslass 15 ins Freie geblasen. Der Heizwasserboiler 16 speist über ein Warmwasserleitungsnetz 18 die Heizkörper der Räume, z. B. Radiatoren 17 oder Rohre 7 einer Fußbodenheizung. Der Warmwasserboiler speist über ein Warmwasserleitungsnetz 21 mehrere Warmwasserentnahmestellen 20, zum Beispiel eine Dusche oder sonstige Armaturen. Weil in den hermetisch nach oben und seitlich abgetrennten und abgeschlossenen Stauraum 9 vorgewärmte Luft strömt, die nur über die Luftleitung 5 unter der Wirkung der thermischen Überdrucks zum Wärmetauscher oder Wärmespeicher 8 gelangen kann, wird ein hoher Wirkungsgrad bei Ausnutzung der Sonnenenergie erzielt. Bei niederen Außentemperaturen, nachts oder bei bewölktem Himmel, kann das Wasser im Heizwasserboiler 16 und im Warmwasserboiler 19 zusätzlich mit Strom, Gas, Öl, Kohle, Holz oder einer anderen Energiequelle erwärmt werden.

Der Querschnitt gemäß Figur 2 lässt die Einzelheiten des Stauraumes 9 besser erkennen.

Im lichtundurchlässigen Teil 12 ist das Dach mit Dachziegeln 23 oder anderen Bauelementen gedeckt, während im lichtdurchlässigen Bereich 3 das Dach 1 eine Verglasung 25 aufweist. Zwischen der aus den Dachziegeln 23 bestehenden Dachhaut und den Dachsparren 24 verläuft die Luftzuführung 4, durch welche Außenluft bei gleichzeitiger Erwärmung in den Stauraum 9 strömt. Nach unten ist der Stauraum 9 durch die Decke 22 begrenzt, die zum Beispiel voll gedämmt oder mit Verglasung versehen sein kann. Vorzugsweise stellt auch die Decke einen luftdichten Abschluß des Stauraumes dar.

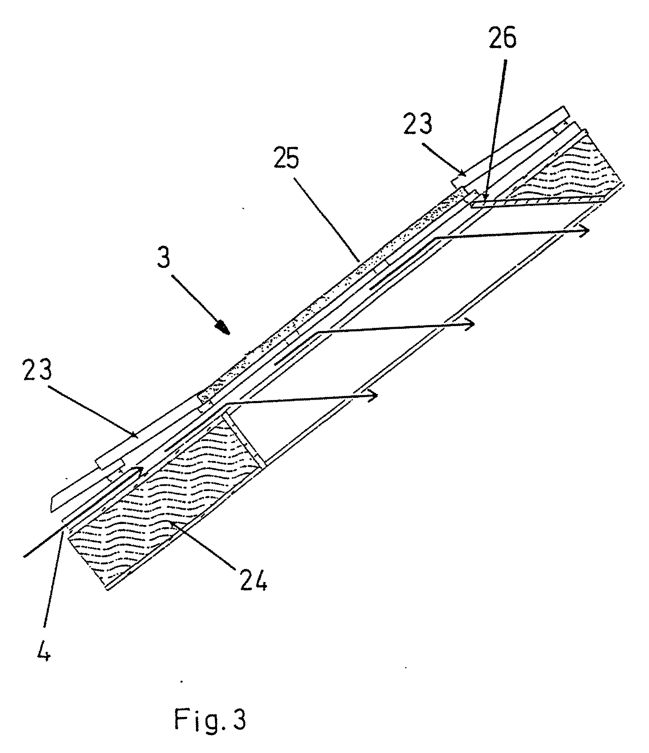

In Fig. 3 ist ein Ausschnitt des geneigten in diesem Bereich luftdichten Daches dargestellt, das aus dem lichtdurchlässigen Teil 3 und einem Teil des lichtundurchlässigen Teils 12 besteht. Im lichtdurchlässigen Teil 3 ist das Dach mit einer Verglasung 25 gedeckt, während im lichtundurchlässigen Teil 12 Dachziegel 23 das Dach bedecken. Die Innenverschalung 13 ist aus den Dachsparren 24 aufgebaut, die im Firstbereich mit einer Abdeckung 26 begrenzt ist.

Die Verglasung 25, die Abdeckung 26 sowie mindestens die sich an die Verglasung 25 anschließenden Dachziegel 23 und die den Stauraum 9 seitlich begrenzenden nicht dargestellten Trennwände bilden eine "Wärmefalle", aus welcher die erwärmte Luft ausschließlich durch die in Figur 1 gezeigte Leitung 5 abfließen kann.

Obwohl sich für das erfindungsgemäße Gebäude ein geneigtes Dach besonders gut eignet, ist die Erfindung nicht auf diese Dachform beschränkt. Es kann beispielsweise auch ein Flachdach mit einer Innenverschalung vorgesehen sein, die so an der Dachhaut angebracht ist, dass zwischen dieser und der Innenverschalung die Luftzuführung verläuft, durch welche die Außenluft angesaugt wird und in den Stauraum strömt. Der Stauraum kann an beliebiger Stelle vorgesehen sein. Über dem Stauraum ist für die Dachhaut eine Verglasung oder beispielsweise ein Oberlicht vorgesehen. Auch in diesem Fall ist der Stauraum ein getrennter und luftdicht abgeschlossener Raum.

Durch den erfindungsgemäßen Aufbau des Gebäudes lässt sich eine beträchtliche Senkung der Heizkosten erzielen. Außerdem wird das erfindungsgemäße Gebäude weitgehend mit erneuerbarer, umweltfreundlicher Energie beheizt. Neben der Umweltfreundlichkeit und den geringen Heizkosten ist als sehr wichtiger Vorteil eine weitgehende Unabhängigkeit, bei optimaler Wärmedämmung des Gebäudes oder bei günstiger Witterung sogar eine vollkommene Autarkie, nämlich eine monovalente Beheizung mittels der Umweltwärme, zu nennen.

Ungünstigstenfalls ist eine zusätzliche konventionelle Beheizung an sehr kalten Tagen und bei bedecktem Himmel bzw. bei erhöhtem Warmwasserbedarf erforderlich.

### Bezugszeichenliste

- 1: Gebäude
- 2: Dach
- 3: lichtdurchlässiger Teil
- 4: Luftzuführung
- 5: Luftleitungssystem
- 6: Öffnung
- 7: Rohre der Fußbodenheizung
- 8: Wärmetauscher, Wärmepumpe, Wärmespeicher
- 9: Stauraum
- 10: Dachfirst
- 11: Einlass
- 12: lichtundurchlässiger Teil
- 13: Innenverschalung
- 14: Luftleitungssystem
- 15: Auslass
- 16: Heizwasserkessel
- 17: Heizkörper
- 18: Warmwasserleitungsnetz
- 19: Warmwasserkessel
- 20: Warmwasserentnahmestelle
- 21: Warmwasserleitungsnetz
- 22: Decke
- 23: Dachziegel
- 24: Dachsparren
- 25: Verglasung
- 26: Abdeckung

## Patentansprüche

1. Gebäude (1) mit einem Dach (2), das einen licht- und wärmedurchlässigen Teil (3) aufweist, unter dem ein abgetrennter Raum (9) vorgesehen ist, in dem von außen Luft über unter der Dachhaut verlaufenden Kanäle zuführbar ist, welche nach Erwärmen über eine Luftleitung in das Gebäude zu Heizzwecken eingeleitet wird, **dadurch gekennzeichnet, dass** der Raum (9) mindestens nach oben und seitlich zur Bildung eines Stauraumes (9) derart abgedichtet ist, dass die erwärmte Luft allein unter Wirkung des thermischen Überdrucks über die Luftleitung (5) einem im Haus befindlichen Wärmespeicher, Wärmetauscher, einer Wärmepumpe (8), einem Heizkörper oder unmittelbar einem zu beheizenden Raum selbstregelnd zugeführt wird.

2. Gebäude nach Anspruch 1, **dadurch gekennzeichnet, dass** die Dachhaut mindestens in Nachbarschaft des licht- und wärmedurchlässigen Teils (3) abgedichtet ist.

3. Gebäude nach Anspruch 1 oder 2, **dadurch gekennzeichnet, dass** die Dachhaut wärmedurchlässig ist.

4. Gebäude nach Anspruch 1, 2 oder 3,
**dadurch gekennzeichnet, dass** an der Dachhaut im lichtundurchlässigen Bereich (12) eine Innenverschalung (13) so angebracht ist, dass ein die Luftzuführung (4) bildender Luftkanal zwischen der Dachhaut und der Innenverschalung (13) gebildet wird.

5. Gebäude nach einem der vorangehenden Ansprüche,
**dadurch gekennzeichnet, dass** ein zweites Luftleitungssystem (14) zum Absaugen verbrauchter Luft aus den Räumen des Gebäudes (1) zur weiteren Nutzung an den Wärmetauscher (8) oder die Wärmepumpe (8) angeschlossen ist.

6. Gebäude nach einem der vorangehenden Ansprüche,
**dadurch gekennzeichnet, dass** im Wärmetauscher (8) oder in der Wärmepumpe (8) ein Heizwasserboiler oder Behälter (16) zum Speisen von Heizkörpern (7,17) mit warmem Wasser über ein erstes Wasserleitungsnetz (18) eingebaut ist.

7. Gebäude nach einem der vorangehenden Ansprüche,
**dadurch gekennzeichnet, dass** im Wärmetauscher (8) oder in der Wärmepumpe (8) ein Heizwasserboiler oder Behälter (19) zum Speisen von Warmwasserentnahmestellen (20) über ein zweites Wasserleitungsnetz (21) eingebaut ist.

8. Gebäude nach einem der vorangehenden Ansprüche,
**dadurch gekennzeichnet, dass** der Stauraum (9) unter dem Dachfirst (10) vorgesehen ist und nach unten durch eine Decke (22) vorzugsweise luftdicht abgeschlossen ist.

9. Gebäude nach einem der vorangehenden Ansprüche,
**dadurch gekennzeichnet, dass** der lichtdurchlässige Teil (3) des Daches (2) durch eine Verglasung (25) abgedeckt ist, während der lichtundurchlässige Teil (12) mit Dachziegeln (23) oder anderen Bauelementen gedeckt ist.

10. Gebäude nach Anspruch 9, **dadurch gekennzeichnet, dass** der an sich lichtundurchlässige Teil (3) einzelne, lichtdurchlässige Dachelemente, vorzugsweise transparente Glasziegel, aufweist.

## Claims

1. A building (1) having a roof (2) comprising a translucent and diathermanous part (3), beneath which a separate space (9) is provided, in which air can be supplied from outside via channels running beneath the roof cladding, which air, after being heated, is introduced into the building for heating purposes via an air duct,
**characterised in that** the space (9) is sealed at least at the top and laterally to form a storage area (9) in such a manner that the heated air is supplied in a self-regulating manner exclusively under the effect of the thermal overpressure via the air duct (5) to a heat reservoir located in the house, a heat exchanger, a heat pump (8), a radiator or directly to a room to be heated.

2. A building according to Claim 1,
**characterised in that** the roof cladding is sealed at least in the vicinity of the translucent and diathermanous part (3).

3. A building according to Claim 1 or 2,
**characterised in that** the roof cladding is diathermanous.

4. A building according to Claim 1, 2 or 3,
**characterised in that** inner boarding (13) is mounted on the roof cladding in the lightproof region (12) so that an air channel forming the air supply (4) is formed between the roof cladding and the inner boarding (13).

5. A building according to one of the preceding Claims,
**characterised in that** a second air duct system (14) for extracting used air out of the rooms of the building (1) for recycling is connected to the heat exchanger or the heat pump (8).

6. A building according to one of the preceding Claims,
**characterised in that** a heating circuit water boiler or tank (16) for feeding heating devices (7, 17) with hot water via a first water pipe network (18) is installed in the heat exchanger (8) or in the heat pump (8).

7. A building according to one of the preceding Claims,
**characterised in that** a heating circuit water boiler or tank (19) for feeding hot water consumption points (20) via a second water pipe network (21) is installed in the heat exchanger (8) or in the heat pump (8).

8. A building according to one of the preceding Claims,
**characterised in that** the storage area (9) is provided beneath the ridge (10) and at the bottom is closed in a preferably air-tight manner by a ceiling (22).

9. A building according to one of the preceding Claims,
**characterised in that** the translucent part (3) of the roof (2) is covered by glazing (25), while the lightproof part (12) is covered with roof tiles (23) or other structural elements.

10. A building according to Claim 9,
**characterised in that** the intrinsically lightproof part (3) comprises individual translucent roof elements, preferably transparent glass tiles.

## Revendications

1. Bâtiment (1) comprenant un toit (2) qui présente une partie laissant passer la lumière et la chaleur (3) sous lequel est prévue une pièce (9) séparée dans laquelle il est possible de l'extérieur et par des canaux s'étendant sous la couverture du toit, d'introduire de l'air qui, après réchauffement, pénètre dans le bâtiment à des fins de chauffage par une conduite d'air,
**caractérisé en ce que**
la pièce (9) est étanche au moins vers le haut et sur les côtés en vue de former un local de retenue (9) de sorte que la conduite d'air (5) amène l'air chauffé d'une manière auto-régulatrice sous le seul effet de la surpression thermique, dans un accumulateur thermique, un échangeur thermique, une thermopompe (8), un radiateur ou directement une pièce à chauffer, se trouvant dans la maison.

2. Bâtiment selon la revendication 1,
**caractérisé en ce que**
la couverture du toit est isolée au moins à proximité de la partie laissant passer la lumière et la chaleur.

3. Bâtiment selon l'une des revendications 1 ou 2,
**caractérisé en ce que**
la couverture du toit laisse passer la chaleur.

4. Bâtiment selon l'une des revendications 1, 2 ou 3,
**caractérisé en ce que**
la couverture du toit comporte dans la zone ne laissant pas passer la lumière (12) un coffrage intérieur (13) disposé pour former un canal d'air constituant l'admission d'air (4) entre la couverture du toit et le coffrage intérieur (13).

5. Bâtiment selon l'une quelconque des revendications précédentes,
**caractérisé en ce qu'**
un deuxième système de conduite d'air (14) est raccordé à l'échangeur thermique (8) ou à la thermopompe (8) pour l'aspiration de l'air usé en provenance des pièces du bâtiment (1) en vue d'une utilisation ultérieure.

6. Bâtiment selon l'une quelconque des revendications précédentes,
**caractérisé en ce qu'**
un chauffe-eau ou un récipient (16) pour alimenter des radiateurs (7, 17) en eau chaude par un premier réseau de conduites d'eau (18) est intégré dans l'échangeur thermique (8) ou dans la thermopompe (8).

7. Bâtiment selon l'une quelconque des revendications précédentes,
**caractérisé en ce qu'**
un chauffe-eau ou un récipient (19) pour l'alimentation de points de prises d'eau chaude (20) par un deuxième réseau de conduites d'eau (21) est intégré dans l'échangeur thermique (8) ou dans la thermopompe (8).

8. Bâtiment selon l'une quelconque des revendications précédentes,
**caractérisé en ce que**
le local de retenue (9) prévu sous le faîte (10) est de préférence étanche à l'air vers le bas par un plafond (22).

9. Bâtiment selon l'une quelconque des revendications précédentes,
**caractérisé en ce que**
la partie laissant passer la lumière (3) du toit (2) est recouverte d'un vitrage (25), alors que la partie ne laissant pas passer la lumière (12) est recouverte avec des tuiles (23) ou d'autres éléments de construction.

10. Bâtiment selon la revendication 9,
**caractérisé en ce que**
la partie ne laissant en principe pas passer la lumière (3) présente des éléments de toit, de préférence des tuiles en verre transparentes, individuels, laissant passer la lumière.
